# EUROPEAN PATENT APPLICATION

(11) **EP 4 668 712 A1**
(43) Date of publication of application: **24.12.2025**
(21) Application number: 25182212.8
(22) Date of filing: 12.06.2025
(51) Int. Cl.: H04L 65/1069, H04L 65/1104, H04L 65/65, H04L 65/70

(54) **A METHOD, AN APPARATUS AND A COMPUTER PROGRAM PRODUCT FOR TRANSMITTING REAL-TIME MEDIA**

(30) Priority: 20.06.2024 PK 4462024
(71) Applicant: Nokia Technologies Oy, 02610 Espoo (FI)
(72) Inventor: AHSAN, Saba, Espoo (FI); GÜL, Serhan, Berlin (DE); ILLAHI, Gazi Karam, Espoo (FI); CURCIO, Igor Danilo Diego, Gravina di Catania (IT)
(74) Representative: Nokia EPO representatives

(57) **Abstract**

The embodiments relate to a method comprising establishing a transmission session to transmit real-time media as one or more QUIC streams to an endpoint; creating a session component comprising a media description of the real-time media; inserting into the session component at least one of the following: an attribute defining a number of QUIC streams per media type or an attribute defining one or more QUIC stream identifiers; transmitting the session component to the endpoint; associating real-time media packets with QUIC streams; and transmitting multiple QUIC streams, each carrying one or more real-time media packets, to the endpoint. In addition, the embodiments relate to technical equipment for the same.

## Description

### Technical Field

The present solution generally relates to transmission of real-time media.

### Background

Real-time Transport Protocol (RTP) is designed for carrying real-time media for conversational media sessions, such as video conferences, across the Internet. The underlying transport protocol for RTP has traditionally been User Datagram Protocol (UDP), but as an improvement, QUIC is replacing UDP as the underlying transport protocol.

The present embodiments provide an improvement to transmission of real-time media over QUIC.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

Various aspects include a method, an apparatus and a computer readable medium comprising a computer program stored therein, which are characterized by what is stated in the independent claims. Various embodiments are disclosed in the dependent claims.

According to a first aspect, there is provided an apparatus comprising means for establishing a transmission session to transmit real-time media as one or more QUIC streams to an endpoint; means for creating a session component comprising a media description of the real-time media; means for inserting into the session component at least one of the following: an attribute defining a number of QUIC streams per media type or an attribute defining one or more QUIC stream identifiers for a particular media type; means for transmitting the session component to the endpoint; means for associating real-time media packets with QUIC streams; and means for transmitting multiple QUIC streams, each carrying one or more real-time media packets, to the endpoint.

According to a second aspect, there is provided a method, comprising: establishing a transmission session to transmit real-time media as one or more QUIC streams to an endpoint; creating a session component comprising a media description of the real-time media; inserting into the session component at least one of the following: an attribute defining a number of QUIC streams per media type or an attribute defining one or more QUIC stream identifiers for a particular media type; transmitting the session component to the endpoint; associating real-time media packets with QUIC streams; and transmitting multiple QUIC streams, each carrying one or more real-time media packets, to the endpoint.

According to a third aspect, there is provided an apparatus comprising at least one processor, memory including computer program code, the memory and the computer program code configured to, with the at least one processor, cause the apparatus to perform at least the following: establish a transmission session to transmit real-time media as one or more QUIC streams to an endpoint; create a session component comprising a media description of the real-time media; insert into the session component at least one of the following: an attribute defining a number of QUIC streams per media type or an attribute defining one or more QUIC stream identifiers for a particular media type; transmit the session component to the endpoint; associate real-time media packets with QUIC streams; and transmit multiple QUIC streams, each carrying one or more real-time media packets, to the endpoint.

According to a fourth aspect, there is provided computer program product comprising computer program code configured to, when executed on at least one processor, cause an apparatus or a system to: establish a transmission session to transmit real-time media as one or more QUIC streams to an endpoint; create a session component comprising a media description of the real-time media; insert into the session component at least one of the following: an attribute defining a number of QUIC streams per media type or an attribute defining one or more QUIC stream identifiers for a particular media type; transmit the session component to the endpoint; associate real-time media packets with QUIC streams; and transmit multiple QUIC streams, each carrying one or more real-time media packets, to the endpoint.

According to an embodiment, an attribute defining flow identifications used for identifying when QUIC datagrams are used is inserted into the session component.

According to an embodiment, an attribute defining maximum and/or minimum number of QUIC streams is inserted into the session component.

According to an embodiment, the session component is created according to session description protocol (SDP) format.

According to an embodiment, the session component is created according to extensible messaging and presence protocol (XMPP) format or JavaScript Object Notation (JSON) format.

According to an embodiment, the real-time media packet is a real-time transport protocol (RTP) packet or an RTP control packet (RTCP).

According to an embodiment, the computer program product is embodied on a non-transitory computer readable medium.

### Description of the Drawings

In the following, various embodiments will be described in more detail with reference to the appended drawings, in which
Fig. 1 shows an example of Session Description Protocol (SDP);
Fig. 2 shows another example of SDP;
Fig. 3 shows an example of an SDP offer from a client and an SDP answer from another client;
Fig. 4 is a flowchart illustrating a method according to an embodiment, and
Fig. 5 shows an apparatus according to an embodiment.

### Description of Example Embodiments

Certain abbreviations that may be found in the description are herewith defined as follows:
- ACK: Acknowledgements
- AR: Augmented Reality
- DTLS: Datagram Transport Layer Security
- CDMA: Code-Division Multiple Access
- CPU: Central Processing Unit
- DSP: Digital Signal Processor
- FDMA: Frequency-Division Multiple Access
- GMS: Global System for Mobile Communications
- GPU: Graphics Processing Unit
- HTTP: HyperText Transfer Protocol
- ID: Identifier
- IEEE: Institute of Electrical and Electronics Engineers
- IETF: Internet Engineering Task Force
- IMD: Integrated Messaging Device
- IMS: Instant Messaging Service
- JSON: JavaScript Object Notation
- MMS: Multimedia Messaging Service
- MR: Mixed Reality
- MTU: Maximum Transmission Unit
- NAT: Network Address Translation
- PC: Personal Computer
- PDA: Personal Digital Assistant
- QSID: QUIC Stream ID
- QUIC: Quick UDP Internet Connections
- RoQ: RTP over QUIC
- RTCP: RTP control protocol
- RTP: Realtime Transport Protocol
- SDP: Session Description Protocol
- SMS: Short Messaging Service
- TCP-IP: Transmission Control Protocol-Internet Protocol
- TDMA: Time-Division Multiple Access
- TLS: Transport Layer Security
- TV: Television
- UDP: User Datagram Protocol
- UMTS: Universal Mobile Telecommunications System
- VR: Virtual Reality
- WLAN: Wireless Local Area Network
- XMPP: Extensible Messaging and Presence Protocol

The following description and drawings are illustrative and are not to be construed as unnecessarily limiting. The specific details are provided for a thorough understanding of the disclosure. However, in certain instances, well-known or conventional details are not described in order to avoid obscuring the description. Reference in this specification to "one embodiment" or "an embodiment" means that a particular feature, structure, or characteristic described in connection with the embodiment is included in at least one embodiment of the disclosure.

The present embodiments enable transmission of real-time media over QUIC with stream identification. According to an example, the real-time media is carried by an RTP or RTCP. Thus, in one example, the present embodiments, enables stream identification in RTP over QUIC.

QUIC (IETF RFC 9000 "QUIC: A UDP-Based Multiplexed and Secure Transport) provides applications with flow-controlled streams for structured communication, low-latency connection establishment, and network path migration. QUIC includes security measures that ensure confidentiality, integrity, and availability in a range of deployment circumstances.

In QUIC, endpoints (for example, a client and a server; a sender and a receiver) communicate by exchanging QUIC packets. The packets may contain frames, which carry control information and application data between the endpoints.

Streams in QUIC provide a lightweight, ordered byte-stream abstraction to an application. Streams can be unidirectional or bidirectional. Streams can be created by sending data. Other processes associated with stream management, i.e., ending, canceling, and managing flow control, are all designed to impose minimal overheads. For instance, a single stream frame can open, carry data for, and close a stream. Streams can also be long-lived and can last the entire duration of a connection.

Streams can be created by either endpoint. Streams can concurrently send data interleaved with other streams, and can be canceled. QUIC does not provide any means of ensuring ordering between bytes on different streams.

QUIC allows for an arbitrary number of streams to operate concurrently and for an arbitrary amount of data to be sent on any stream, subject to flow control constraints and stream limits.

Streams can be unidirectional or bidirectional. Unidirectional streams carry data in one direction: from the initiator of the stream to its peer. Bidirectional streams allow for data to be sent in both directions.

Streams are identified within a connection by a numeric value, referred to as the stream ID. A stream ID is a 62-bit integer (0 to 2⁶²-1) that is unique for all streams on a connection. Stream IDs are encoded as variable-length integers. A QUIC endpoint must not reuse a stream ID within a connection.

The least significant bit (0x01) of the stream ID identifies the initiator of the stream. Client-initiated streams have even-numbered stream IDs (with the bit set to 0), and server-initiated streams have odd-numbered stream IDs (with the bit set to 1).

The second least significant bit (0x02) of the stream ID distinguishes between bidirectional streams (with the bit set to 0) and unidirectional streams (with the bit set to 1).

The two least significant bits from a stream ID therefore identify a stream as one of four types, as summarized in the following Table:

| **Bits** | **Stream Type** |
|---|---|
| 0x00 | Client-Initiated, Bidirectional |
| 0x01 | Server-Initiated, Bidirectional |
| 0x02 | Client-Initiated, Unidirectional |
| 0x03 | Server-Initiated, Unidirectional |

MAX_STREAMS frames are used to inform a peer of a number of streams of a given type it is permitted to open. MAX_STREAMS frames contain the following field "Maximum Streams". The value for this field cannot exceed 2⁶⁰, as it is not possible to encode stream IDs larger than 2⁶²-1. Receipt of a frame that permits opening of a stream larger than this limit must be treated as a connection error of type FRAME_ENCODING_ERROR.

Loss or reordering can cause an endpoint to receive a MAX_STREAMS frame with a lower stream limit than was previously received. MAX_STREAMS frames that do not increase the stream limit must be ignored. This has been specified in the RFC 9000 originating from https://datatracker.ietf.org/doc/html/rfc9000 .

An endpoint must not open more streams than permitted by the current stream limit set by its peer. For instance, a server that receives a unidirectional stream limit of 3 is permitted to open streams 3, 7, and 11, but not stream 15. An endpoint must terminate a connection with an error of type STREAM_LIMIT_ERROR if a peer opens more streams than was permitted. This includes violations of remembered limits in Early Data. This has been specified in the RFC 9000 originating from https://datatracker.ietf.org/doc/html/rfc9000 .

It should be noted that these frames (and the corresponding transport parameters) do not describe the number of streams that can be opened concurrently. The limit includes streams that have been closed as well as those that are open.

QUIC datagrams allow the applications to transmit unreliable data which can be beneficial especially for applications that transmit real-time data such as real-time communication and gaming. Applications can use both reliable streams and unreliable datagram flows simultaneously sharing a single handshake and authentication context. This has advantages in terms of latency compared to opening both a TLS connection and DTLS connection. QUIC datagrams are subject to the same kind of QUIC congestion as QUIC streams.

Format of the datagram frames:

```
      DATAGRAM Frame {
       Type (i) = 0x30..0x31,
       [Length (i)],
       Datagram Data (..),
      }
```

The least significant bit in the Type field indicates whether a Length field is present. If it is 0, no length field; if it is 1, Length field is present. Length is a variable-length integer specifying the length of the Datagram Data field in bytes. Datagram Data is the bytes of the datagram data to be delivered.

Since QUIC datagram frames belong to a QUIC connection as a whole, they are not associated with a stream ID. However, applications can define custom datagram identifier in the Datagram Data field to distinguish between different flows of datagrams. The semantics of such identifier is up to the application. For example, HTTP datagrams uses the following format for the Datagram Data field:

```
      HTTP/3 Datagram {
       Quarter Stream ID (i),
       HTTP Datagram Payload (..),
      }
```

In the given example, "Quarter Stream ID" is a variable-length integer that contains the value of the client-initiated bidirectional stream that this datagram is associated with divided by four (the division by four stems from the fact that HTTP requests are sent on client-initiated bidirectional streams, which have stream IDs that are divisible by four).

If an HTTP/3 Datagram is received and its Quarter Stream ID field maps to a stream that has not yet been created, the receiver shall either drop that datagram silently or buffer it temporarily (on the order of a round trip) while awaiting the creation of the corresponding stream.

Other application layer protocols or applications using QUIC can define their own custom datagram identifiers that are inserted into the Datagram Data field. These identifiers may be associated to a stream ID value as in the case for HTTP/3 or may be defined by the application using another logic.

A document "RTP Over QUIC (RoQ)" (draft-ietf-avtcore-rtp-over-quic-10, 8 May 2024) defines a mapping for RTP and RTCP over QUIC, called RoQ, and describes ways to reduce the amount of RTCP traffic by leveraging state information readily available within a QUIC endpoint. The document defines a flow identifier for multiplexing multiple RTP and RTCP ports on the same QUIC connection to conserve ports, especially at NATs and Firewalls. The flow identifier is the QUIC variable-length integer as discussed above. Each flow identifier is associated with an RTP stream.

To send RTP packets over QUIC, a sender has to open at least one new unidirectional QUIC stream. The sender can open new QUIC streams for different RTP packets using the same flow identifier.

Stream encapsulation format for RoQ streams is as follows:

```
      Payload {
         Flow Identifier (i),
         RTP/RTCP Payload(..) ...,
        }
```

Flow Identifier is used for demultiplexing different data flows on the same QUIC connection, and the RTP/RTCP Payload contains the RTP/RTCP payload beginning with a length field indicating the length of the packet:

```
        RTP/RTCP Payload {
         Length(i),
         RTP/RTCP Packet(..),
        }
```

Senders can also transmit RTP packets in QUIC datagrams, using a QUIC extension. QUIC datagrams can only be used if the use of the QUIC datagram extension was successfully negotiated during the QUIC handshake. If the QUIC datagram extension was negotiated using a signaling protocol, but was not also negotiated during the resulting QUIC handshake, an endpoint can close the connection with the ROQ_EXPECTATION_UNMET error code.

QUIC datagrams preserve application frame boundaries. Thus, a single RTP packet can be mapped to a single QUIC datagram without additional framing. Because QUIC datagrams cannot be IP-fragmented, senders need to consider the header overhead associated with QUIC datagrams, and ensure that the RTP packets, including their payloads, flow identifier, QUIC, and IP headers, will fit into the Path MTU.

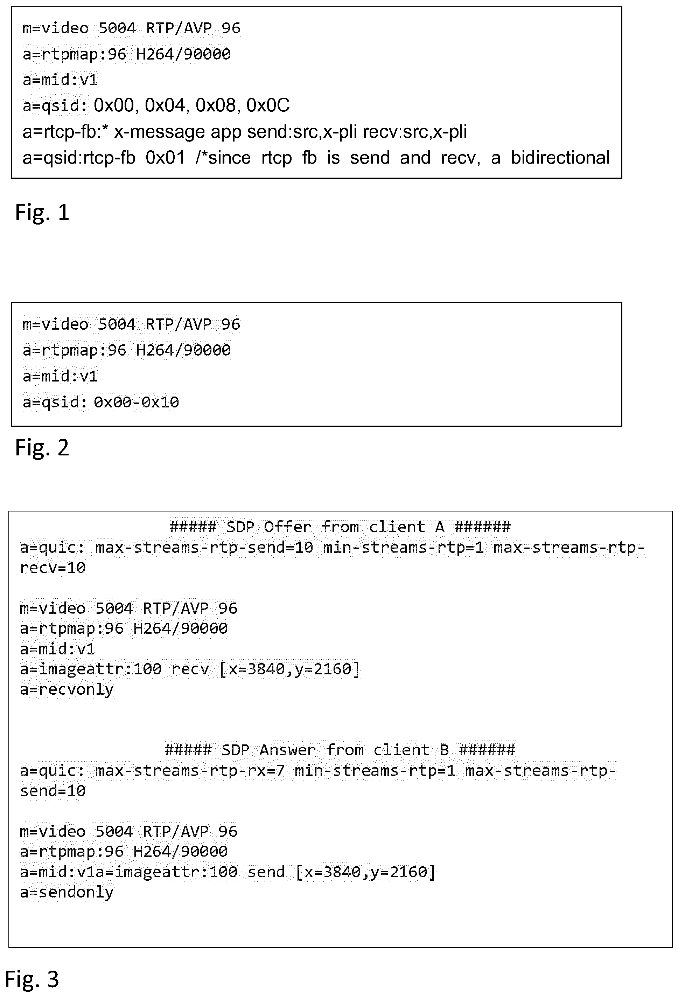

Figure 3 shows the encapsulation format for RoQ Datagrams.

```
      Payload {
       Flow Identifier (i),
       RTP Packet (..),
      }
```

In the given example "Flow Identifier" is used to demultiplex different data flows on the same QUIC connection, and "RTP Packet" is the packet to transmit.

RoQ senders need to be aware that QUIC uses the concept of QUIC frames, and QUIC connections use different kinds of QUIC frames to carry different application and control data types. A single QUIC packet can contain more than one QUIC frame, including, for example, QUIC stream frames or QUIC datagram frames carrying application data and ACK frames carrying QUIC acknowledgments. However, the overall size should fit into the MTU. One implication is that the number of packets a QUIC stack transmits depends on whether it can fit ACK and QUIC datagram frames in the same QUIC packet. Suppose the application creates many QUIC datagram frames that fill up the QUIC packet. In that case, the QUIC stack would need to create additional packets for ACK frames, and possibly other control frames. The additional overhead could, in some cases, be reduced if the application creates smaller RTP packets, such that the resulting QUIC datagram frame can fit into a QUIC packet that can also carry ACK frames. Another implication is that multiple RTP packets in either QUIC streams or QUIC datagrams might be encapsulated in a single QUIC packet.

Since QUIC datagrams are not retransmitted on loss, if an application is using QUIC datagrams and wishes to retransmit lost RTP packets, the application has to carry out that retransmission. RTP retransmissions can be done in the same RTP session or in a different RTP session and the flow identifier must be set to the flow identifier of the RTP session in which the retransmission happens.

Future extensions could further build on the flow identifier to multiplex RTP/RTCP with other protocols on the same connection, as long as these protocols can co-exist with RTP/RTCP without interfering with the ability of this connection to carry real-time media.

To avoid head-of-line blocking, RTP over QUIC (RoQ) senders can use multiple QUIC streams to send RTP/RTCP packets. The receiver must have a mechanism to differentiate these packets and map them to their flows. RoQ proposes a flow ID to identify a particular RTP/RTCP flow. The flow ID is a mandatory field in the QUIC payload for RoQ stream encapsulation. The QUIC payload can consist of one or more RTP packets belonging to the same RTP session. The flow ID increases overhead unnecessarily.

Furthermore, parsing the flow ID is an additional step added to RoQ implementations, which already include parsing QUIC stream IDs, which serve a similar purpose.

The present solution provides an endpoint, either a client or a server, or a sender or a receiver, that is configured to
- Reserve a block of QUIC stream IDs for transporting a real-time media stream (e.g., video, audio, data, etc. carried e.g., by RTP or RTCP).
- Signal by a session component, e.g., in an SDP offer/answer, the media description of the real-time media stream and the QUIC stream IDs that will be used for transporting the real-time media stream over QUIC.
- Indicate in the session component the maximum and minimum number of QUIC stream IDs that it can use e.g., for a real-time media stream.
- Negotiate with another endpoint one or more of the above.

An endpoint, such as an RTP endpoint as an example, that uses QUIC for transport can use multiple QUIC streams to solve the head-of-line blocking problem. This implies that if a packet on one stream is lost or delayed, the packets on other streams will still be delivered. Since real-time media packets include required sequence and timing information, the packets can be reordered at the receiver. To do this, a client, such as an RTP client for example, can open a new stream per packet, but this can quickly exhaust the stream ID space within a QUIC connection. Alternatively, the client can allocate a fixed number of QUIC streams that it can use for a particular real-time media stream. For a proper operation, both endpoints, sender, and receiver, must be aware of the QUIC stream IDs that will be used for sending the media. The endpoints can exchange this information in session signalling, e.g., in SDP.

The present embodiments define the following parameters for an RoQ session that can be exchanged, e.g., using SDP or other signalling mechanisms:
1. Number of QUIC streams per media type (wherein a media type is video or audio or data, etc.).
2. One or more QUIC stream IDs for a particular media type (wherein a media type is video or audio or data, etc.).

The above can be signaled as attributes and can be combined with send, recv or sendrecv to indicate whether the limit applies to incoming, outgoing or both types of media streams.

Figure 1 shows an example of a session description component, such as SDP, where the attribute qsid defines four stream IDs provided as an array, given by enumeration, i.e., 0x00, 0x04, 0x08, 0x0C. In this example, a different qsid attribute is also provided for the RTCP feedback, i.e., 0x01.

Figure 2 shows another example of a session description component, such as SDP, where the attribute qsid defines a plurality of QUIC stream IDs provided as a range, i.e., 0x00-0x10. The QUIC streams are unidirectional, so depending on which endpoint has initiated the connection, the sender can reserve, for example, streams 0x00, 0x04, 0x08 and so on, if the initiator is the client, and streams 0x01, 0x05, 0x09 and so on if the initiator is the server. The range in this case will only include the unidirectional stream numbers that comply with this condition, i.e., in Figure 2 the stream IDs are 0x00, 0x04, 0x08, 0x0C and 0x10.

When QUIC stream IDs for each real-time media stream are known, the stream encapsulation may be simplified as below. It is appreciated that the example has no flow-id and consequently has a lower overhead:

```
             Payload {
              Length(i),
              RTP/RTCP Packet(..),
             }
```

The implementation can reduce computational complexity as additional state parameters for flow IDs are not tracked, while ability to multiplex multiple real-time media streams on a single QUIC connection or in a QUIC packet is maintained.

In an embodiment, the qsid attribute is used for advertising also flow IDs that are used for identification when QUIC datagrams are used.

The maximum or minimum number of QUIC streams can be indicated in session component, such as SDP, as well. A list of possible parameters is provided in a table below. For each of these parameters, the semantic can be further defined to be indicative of incoming, outgoing, bidirectional or any (undefined) type of streams. It should be noted that bidirectional RTP streams do not exist, whereupon, in this case, the limit can apply to both incoming and outgoing streams as a cumulative or as a separate limit for each direction. For RTCP, depending on where the limit is defined, the value may apply to session RTCP reports or an RTCP feedback associated with a single RTP stream.

| **Parameter** | **Semantic** |
|---|---|
| max-streams-rtp | The maximum number of QUIC streams that can be used for one RTP stream |
| max-streams-rtcp | The maximum number of QUIC streams that can be used for RTCP. |
| max-streams-media | The maximum number of QUIC streams that can be used for one media as defined by the media description in SDP. This limit applies even when RTP is not used. |
| max-concurrent-streams | The maximum concurrent streams that can be used for the QUIC connection. |
| min-streams-rtp | The minimum number of QUIC streams that should be used for one RTP stream |
| min-streams-rtcp | The minimum number of QUIC streams that should be used for one RTCP stream |
| min-streams-media | The minimum number of QUIC streams that should be used for one media as defined by the media description in SDP. This limit applies even when RTP is not used. |

Figure 3 shows an example of session components, i.e., an offer from a client and a answer from another client. In this example, the session components are SDP offer and SDP answer. The SDP offer includes at session-level a maximum and minimum number of QUIC streams that the client can support in the send and receive direction. In the SDP offer, the client A indicates that it can support sending an RTP stream over 10 QUIC streams and can support receiving an RTP stream over 10 QUIC streams. It also indicates the media description of a video stream that it can receive. The example contains no offer for sending an RTP stream but the attributes/parameters defined here are not limited by that. The answer from client B, acknowledges the limitations of client A and also further restricts the number of streams based on its own limitations. In the SDP answer the max-streams-rtp-send is kept as 10 (to match the max-streams-rtp-recv in the offer), indicating that client B can support sending on at least 10 streams. The max-streams-rtp-recv is set to 7 in the answer indicating that client B cannot receive an RTP stream over more than 7 QUIC streams.

In some embodiments, the signalling information indicating stream IDs associated with a media flow may be exchanged over websockets or WebTransport.

In some embodiments of the above embodiment, the signalling information indicating stream IDs associated with a media flow is carried over at least one of JSON (RFC 8259) or XMPP (RFC 6120), or an extension thereof such as RFC 6121, RFC 7395, RFC 7572, or RFC 7081.

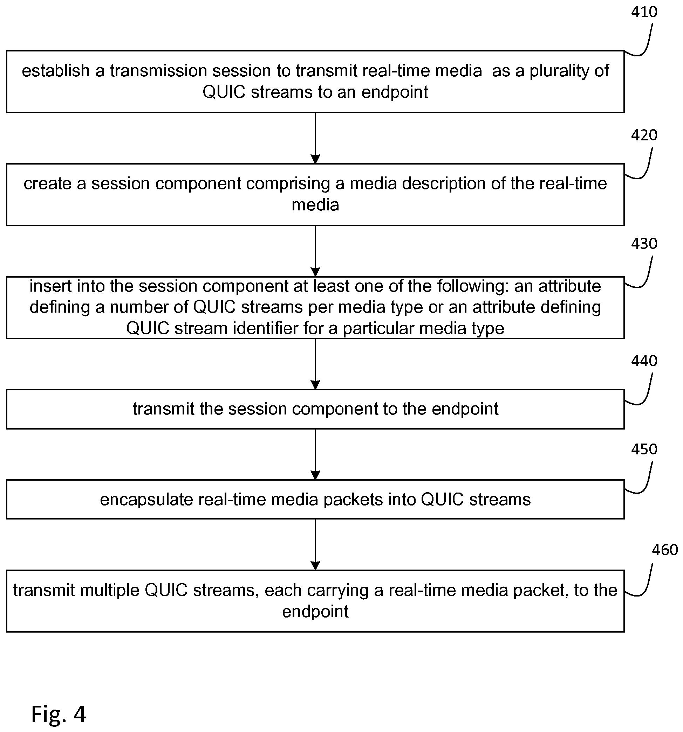

The method according to an embodiment is shown in Figure 4. The method generally comprises establishing 410 a transmission session to transmit real-time media as one or more QUIC streams to an endpoint; creating 420 a session component comprising a media description of the real-time media; inserting 430 into the session component at least one of the following: an attribute defining a number of QUIC streams per media type or an attribute defining one or more QUIC stream identifiers for a particular media type; transmitting 440 the session component to the endpoint; associating 450 real-time media packets with QUIC streams; and transmitting 460 multiple QUIC streams, each carrying one or more real-time media packets, to the endpoint. Each of the steps can be implemented by a respective module of a computer system.

An apparatus according to an embodiment comprises means for establishing a transmission session to transmit real-time media to a receiver as one or more QUIC streams to an endpoint; means for creating a session component comprising a media description of the real-time media; means for inserting into the session component at least one of the following: an attribute defining a number of QUIC streams per media type or an attribute defining one or more QUIC stream identifiers for a particular media type; means for transmitting the session component to the endpoint; associating real-time media packets with QUIC streams; and means for transmitting multiple QUIC streams, each carrying one or more real-time media packets, to the endpoint. The means comprises at least one processor, and a memory including a computer program code, wherein the processor may further comprise processor circuitry. The memory and the computer program code are configured to, with the at least one processor, cause the apparatus to perform the method of Figure 4 according to various embodiments.

As a further embodiment, the apparatus comprises means for inserting into the session component an attribute defining flow identifications used for identifying when QUIC datagrams are used.

As a further embodiment, the apparatus comprises means for inserting into the session component an attribute defining maximum and/or minimum number of QUIC streams.

As a further embodiment, the session component is created according to session description protocol (SPD) format.

As a further embodiment, the session component is created according to extensible messaging and presence protocol (XMPP) format or JavaScript Object Notation (JSON) format.

As a further embodiment, the real-time media packet is a real-time transport protocol (RTP) packet or an RTP control packet (RTCP).

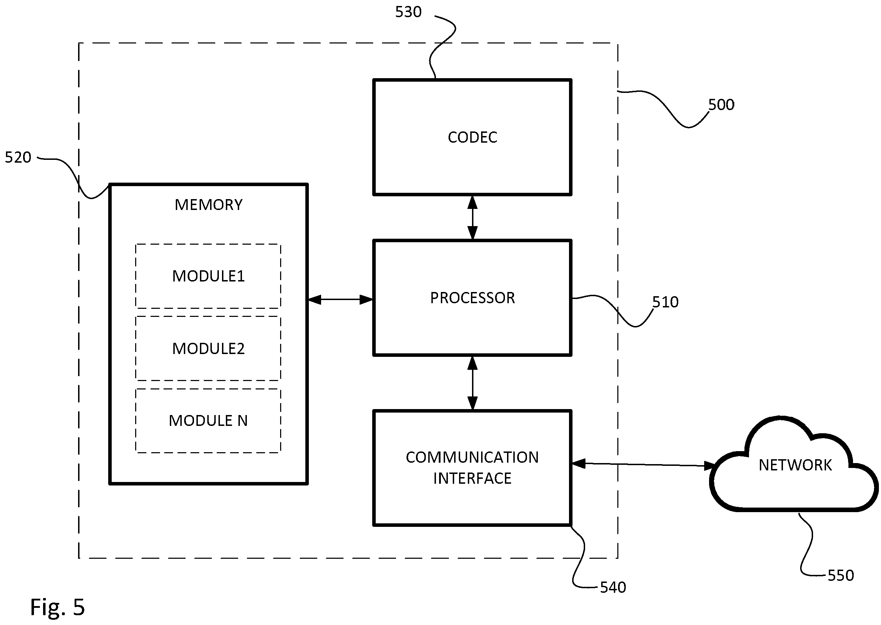

Figure 5 illustrates an example of an electronic apparatus 500, being an example of an endpoint where the present embodiments can be implemented. In some embodiments, the apparatus may be a mobile terminal or a user equipment of a wireless communication system or a camera device. The apparatus 500 may also be comprised at a local or a remote server or a graphic processing unit of a computer. The apparatus may also be comprised as part of a head-mounted display device.

The apparatus may be configured to perform various functions, such as for example, gathering information by one or more sensors, encoding and/or decoding information, receiving and/or transmitting information, analyzing information gathered or received by the apparatus. An apparatus configured to encode a video scene may optionally comprise one or more microphones for capturing the scene and/or one or more cameras for capturing information about the physical environment in which the scene is captured. Alternatively, the apparatus configured for encoding may be configured to receive information about an environment in which a scene is captured and/or a simulated environment. An apparatus configured to decode and/or render the video scene may be configured to receive a bitstream comprising encoded video. An apparatus configured to decode and/or render the video scene may comprise one or more speakers/audio transducers and/or displays, and/or may be configured to transmit a decoded scene or signals to a device comprising one or more speakers/audio transducers and/or displays. An apparatus configured to decode and/or render the video scene may comprise a user equipment, a head-mounted display, or another device capable of rendering to a user an AR; VR and/or MR experience.

The apparatus 500 comprises one or more processors 510 and one or more memories 520 and one or more transceivers interconnected through one or more buses. The one or more memories 520 store computer instructions, for example in respective modules (Module1, Module2, ModuleN). The one or more processors 510 execute code from the one or more memories 520.

The one or more memories may store data in the form of image, video and/or audio data, and/or may also store instructions to be executed by the processors or the processor circuitry. The one or more processors may comprise a CPU and/or a GPU. The one or more buses may be address, data or control buses, and may include interconnection mechanism, such as a series of lines on a motherboard or integrated circuit, fiber optics or other optical communication equipment. The apparatus also comprises a codec 530 that is configured to implement various embodiments relating to present solution. According to some embodiments, the apparatus may comprise an encoder or a decoder. The apparatus 500 also comprises a communication interface 540 which is suitable for generating wireless communication signals for example for communication with a cellular communications network, a wireless communications system, or a wireless local area network, and thus enabling data transfer over data transfer network 550.

The apparatus 500 may comprise a display in the form of a liquid crystal display. In other embodiments of the invention the display may be any suitable display technology suitable to display an image or video. The apparatus 500 may further comprise a keypad. In other embodiments of the invention any suitable data or user interface mechanism may be employed. For example, the user interface may be implemented as a virtual keyboard or data entry system as part of a touch-sensitive display. The apparatus 500 may comprise a microphone or any suitable audio input which may be a digital or analogue signal input. The apparatus 500 may further comprise an audio output device which in embodiments of the invention may be any one of: an earpiece, speaker, or an analogue audio or digital audio output connection. The apparatus 500 may also comprise a battery (or in other embodiments of the invention the device may be powered by any suitable mobile energy device such as solar cell, fuel cell or clockwork generator). The apparatus may further comprise a camera capable of recording or capturing images and/or video. The camera may be a multi-lens camera system having at least two camera sensors. The camera is capable of recording or detecting individual frames which are then passed to the codec 530 or to processor 510. The apparatus may receive the video and/or image data for processing from another device prior to transmission and/or storage.

The apparatus may operate in a system, comprising multiple communication devices, which can communicate through one or more networks. The system may comprise any combination of wired or wireless networks including, but not limited to a wireless cellular telephone network (such as a GSM, UMTS, CDMA network etc.), a WLAN such as defined by any of the IEEE 802.x standards, a Bluetooth personal area network, an Ethernet local area network, a token ring local area network, a wide area network, and the Internet.

For example, the system can be a mobile telephone network enabling a connection to the internet. The connection can form, but is not limited to, long range wireless connections, short range wireless connections, and various wired connections including, but not limited to, telephone lines, cable lines, power lines, and similar communication pathways.

The example communication devices operating in the system may include, but are not limited to, an electronic device or apparatus, a combination of a PDA and a mobile telephone, a PDA, an IMD, a desktop computer, a notebook computer, each of which can be a representative of the apparatus according to present embodiments. The apparatus according to present embodiments may be stationary or mobile when carried by an individual who is moving. The apparatus may also be located in a mode of transport including, but not limited to, a car, a truck, a taxi, a bus, a train, a boat, an airplane, a bicycle, a motorcycle, or any similar suitable mode of transport.

The apparatus may also be a set-top box; i.e. a digital TV receiver, which may/may not have a display or wireless capabilities, a tablet or laptop or a PC, which have hardware or software or combination of the encoder/decoder implementations, in various operating systems, or a chipset, processor, DSP and/or embedded system offering hardware/software based coding.

The apparatus according to present embodiments may send and receive calls and messages and communicate with service providers through a wireless connection to a base station. The base station may be connected to a network server that allows communication between the mobile telephone network and the internet.

The apparatus may communicate using various transmission technologies including, but not limited to, CDMA, GSM, UMTS, TDMA, FDMA, TCP-IP, SMS, MMS, email, IMS, Bluetooth, IEEE 802.11, and any similar wireless communication technology. A communications device involved in implementing various embodiments of the present invention may communicate using various media including, but not limited to, radio, infrared, laser, cable connections, and any suitable connection.

In telecommunications and data networks, a channel may refer either to a physical channel or to a logical channel. A physical channel may refer to a physical transmission medium such as a wire, whereas a logical channel may refer to a logical connection over a multiplexed medium, capable of conveying several logical channels. A channel may be used for conveying an information signal, for example a bitstream, from one or several senders (or transmitters) to one or several receivers.

The various embodiments can be implemented with the help of computer program code that resides in a memory and causes the relevant apparatuses to carry out the method. For example, a device may comprise circuitry and electronics for handling, receiving, and transmitting data, computer program code in a memory, and a processor that, when running the computer program code, causes the device to carry out the features of an embodiment. Yet further, a network device like a server may comprise circuitry and electronics for handling, receiving, and transmitting data, computer program code in a memory, and a processor that, when running the computer program code, causes the network device to carry out the features of various embodiments.

**If** desired, the different functions discussed herein may be performed in a different order and/or concurrently with other. Furthermore, if desired, one or more of the above-described functions and embodiments may be optional or may be combined.

Although various aspects of the embodiments are set out in the independent claims, other aspects comprise other combinations of features from the described embodiments and/or the dependent claims with the features of the independent claims, and not solely the combinations explicitly set out in the claims.

It is also noted herein that while the above describes example embodiments, these descriptions should not be viewed in a limiting sense. Rather, there are several variations and modifications, which may be made without departing from the scope of the present disclosure as, defined in the appended claims.

## Claims

1. An apparatus comprising:
means for establishing a transmission session to transmit real-time media as one or more QUIC streams to an endpoint;
means for creating a session component comprising a media description of the real-time media;
means for inserting into the session component at least one of the following: an attribute defining a number of QUIC streams per media type or an attribute defining one or more QUIC stream identifiers for a particular media type;
means for transmitting the session component to the endpoint;
means for associating real-time media packets with QUIC streams; and
means for transmitting multiple QUIC streams, each carrying one or more real-time media packets, to the endpoint.

2. The apparatus according to claim 1, further comprising means for inserting into the session component an attribute defining flow identifications used for identifying when QUIC datagrams are used.

3. The apparatus according to claim 1 or 2, further comprising means for inserting into the session component an attribute defining maximum and/or minimum number of QUIC streams.

4. The apparatus according to claim 1 or 2 or 3, where the session component is created according to session description protocol (SDP) format.

5. The apparatus according to claim 1 or 2 or 3, where the session component is created according to extensible messaging and presence protocol (XMPP) format or JavaScript Object Notation (JSON) format.

6. The apparatus according to any of the claims 1 to 5, where the real-time media packet is a real-time transport protocol (RTP) packet or an RTP control packet (RTCP).

7. A method, comprising:
establishing a transmission session to transmit real-time media as one or more QUIC streams to an endpoint;
creating a session component comprising a media description of the real-time media;
inserting into the session component at least one of the following:
an attribute defining a number of QUIC streams per media type or
an attribute defining one or more QUIC stream identifiers for a particular media type;
transmitting the session component to the endpoint;
associating real-time media packets with QUIC streams; and
transmitting multiple QUIC streams, each carrying one or more real-time media packets, to the endpoint.

8. The method according to claim 7, further comprising inserting into the session component an attribute defining flow identifications used for identifying when QUIC datagrams are used.

9. The method according to claim 7 or 8, further comprising inserting into the session component an attribute defining maximum and/or minimum number of QUIC streams.

10. The method according to claim 7 or 8 or 9, where the session component is created according to session description protocol (SDP) format.

11. The method according to claim 7 or 8 or 9, where the session component is created according to extensible messaging and presence protocol (XMPP) format or JavaScript Object Notation (JSON) format.

12. The method according to any of the claims 7 to 11, where the real-time media packet is a real-time transport protocol (RTP) packet or an RTP control packet (RTCP).

13. A computer program product comprising computer program code configured to, when executed on at least one processor, cause an apparatus or a system to:
establish a transmission session to transmit real-time media as one or
more QUIC streams to an endpoint;
create a session component comprising a media description of the real-time media;
insert into the session component at least one of the following: an attribute defining a number of QUIC streams per media type or an attribute defining one or more QUIC stream identifiers for a particular media type;
transmit the session component to the endpoint; associate real-time media packets with QUIC streams; and
transmit multiple QUIC streams, each carrying one or more real-time media packets, to the endpoint.

14. The computer program product according to claim 13, further comprising inserting into the session component an attribute defining flow identifications used for identifying when QUIC datagrams are used.

15. The computer program product according to claim 13 or 14, further comprising inserting into the session component an attribute defining maximum and/or minimum number of QUIC streams.
